# EUROPEAN PATENT APPLICATION

(11) **EP 4 694 077 A2**
(43) Date of publication of application: **11.02.2026**
(21) Application number: 25191174.9
(22) Date of filing: 23.07.2025
(51) Int. Cl.: H04L 47/24, H04W 28/02

(54) **TECHNOLOGIES FOR LOGICAL CHANNEL PRIORITY ADJUSTMENT AND PACKET DISCARDING**

(30) Priority: 07.08.2024 US 202463680561 P; 07.07.2025 US 202519261932
(71) Applicant: Apple Inc., Cupertino, CA 95014 (US)
(72) Inventor: KUO, Ping-Heng, London, UB11 1BB (GB); HU, Haijing, Cupertino, 95014 (US); ROSSBACH, Ralf, 80335 Munich (DE)
(74) Representative: Zacco Denmark A/S

(57) **Abstract**

The present application relates to devices and components including apparatus, systems, and methods for adjusting a logical channel priority and protocol data unit set discarding.

## Description

### CROSS-REFERENCES TO OTHER APPLICATIONS

This application claims priority to U.S. Patent Application No. 19/261,932, for "TECHNOLOGIES FOR LOGICAL CHANNEL PRIORITY ADJUSTMENT AND PACKET DISCARDING" filed on July 7, 2025, which claims priority to U.S. Provisional Application No. 63/680,561, for "TECHNOLOGIES FOR LOGICAL CHANNEL PRIORITY ADJUSTMENT AND PACKET DISCARDING" filed on August 7, 2024, which are herein incorporated by reference in their entireties for all purposes.

### TECHNICAL FIELD

This application relates generally to communication networks and, in particular, to technologies for fallback of logical channel priority adjustment in wireless networks.

### BACKGROUND

Third Generation Partnership Project (3GPP) Technical Specifications (TSs) define standards for wireless networks. These TSs describe aspects related to signaling traffic through systems that incorporate wireless networks.

### BRIEF DESCRIPTION OF THE DRAWINGS

FIG. 1 illustrates a network environment in accordance with some embodiments.
FIG. 2 illustrates a logical channel configured with priorities in accordance with some embodiments.
FIG. 3 illustrates an operation flow/algorithmic structure in accordance with some embodiments.
FIG. 4 illustrates another logical channel configured with priorities in accordance with some embodiments.
FIG. 5 illustrates another operation flow/algorithmic structure in accordance with some embodiments.
FIG. 6 illustrates another operation flow/algorithmic structure in accordance with some embodiments.
FIG. 7 illustrates protocol entities in accordance with some embodiments.
FIG. 8 illustrates discard timers for packets in accordance with some embodiments.
FIG. 9 illustrates another operation flow/algorithmic structure in accordance with some embodiments.
FIG. 10 illustrates a media access control control element in accordance with some embodiments.
FIG. 11 illustrates a user equipment in accordance with some embodiments.
FIG. 12 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

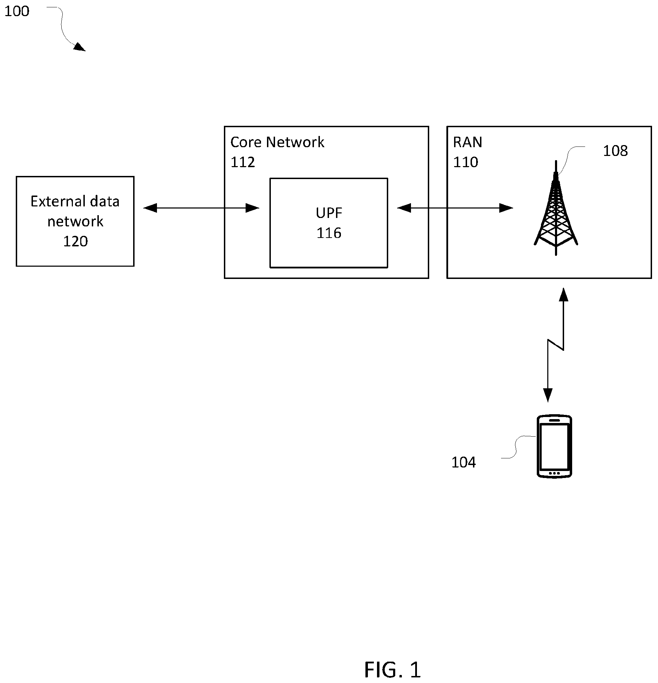

FIG. 1 illustrates a network environment 100 in accordance with some embodiments. The network environment 100 may include a user equipment (UE) 104 communicatively coupled with a base station 108 of a radio access network (RAN) 110. The UE 104 and the base station 108 may communicate over air interfaces compatible with 3GPP TSs such as those that define a Fifth Generation (5G) new radio (NR) system or a later system. The base station 108 may provide user plane and control plane protocol terminations toward the UE 104.

In some embodiments, the UE 104 and base station 108 may establish data radio bearers (DRBs) to support transmission of data over a wireless link between the two nodes. In one example, these DRBs may be used for traffic from extended reality (XR) applications that contains a large amount of data conveying real and virtual images and audio for presentation to a user.

The network environment 100 may further include a core network 112. For example, the core network 112 may comprise a 5^{th} Generation Core network (5GC) or later generation core network. The core network 112 may be coupled to the base station 108 via a fiber optic or wireless backhaul. The core network 112 may provide functions for the UE 104 via the base station 108. These functions may include managing subscriber profile information, subscriber location, authentication of services, or switching functions for voice and data sessions.

The core network 112 may include a user plane function (UPF) 116 that provides for routing and forwarding of user plane packets between the base station 108 and an external data network 120. The BS 108 may receive uplink packets from the UE 104 through the DRBs and may transmit the uplink packets to the UPF 116 through a general packet radio service (GPRS) tunneling protocol-user plane (GTP-U) tunnel. The UPF 116 may remove the packet headers and forward the packets to the external data network 120. The UPF 116 may map downlink packets arriving from an external data network onto specific quality of service (QoS) flows belonging to specific PDU sessions before forwarding to the BS 108. The BS 108 may map the traffic to the appropriate DRBs for delivery to the UE 104.

The UE 104 may include an application layer that generates application traffic to be transmitted to another device through the network environment 100. In some embodiments, the application layer may have an XR application that generates XR traffic. However, embodiments are not limited to XR use cases.

For XR and other services, the application layer may generate PDU sets, with individual PDU sets comprising one or more packets. A packet, which may also be referred to as a PDU, may be an Internet protocol (IP) packet or a non-IP packet. The packets of a PDU set may carry a payload of one unit of information generated by the application layer. The unit of information may be a frame or video slice for XR Services such as those defined in 3GPP Technical Report (TR) 26.926 v18.2.0 (2024-03-26), for example. In some implementations all PDUs in the PDU Set may be needed by an application layer at a destination node to allow the application layer to recover parts or all of the information unit. In other implementations, the application layer on the destination node may still be able to recover parts or all of the information unit even if some PDUs of a PDU set are missing.

In some embodiments, the data produced by an application layer of the UE 104 may include multi-modal data. Multi-modal data may include input data from different kinds of devices/sensors or the output data to different kinds of destinations (e.g. one or more UEs) desired for the same task or application. Multi-modal data may include more than one single-modal data (e.g., one type of data), and there may be a strong dependency among each single-modal data associated with multi-modal data.

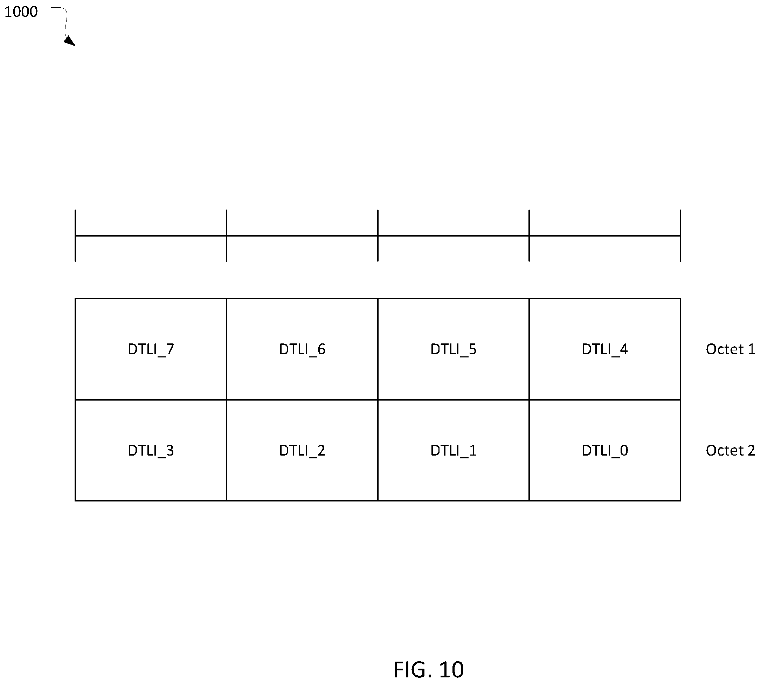

The PDU sets may be provided to a transmitter of the UE 104 that is configured to execute a communication protocol stack, for example, communication protocol stack 1036 of FIG. 10, to facilitate communication via the network environment 100. The transmitter may implement layer 2 (L2) and layer 1 (L1) functionality. At the L2 level, the transmitter may include a service data adaptation protocol (SDAP) layer, a packet data convergence protocol (PDCP) layer, a radio link control (RLC) layer, and a media access control (MAC) layer. At the L1 level, the transmitter may include a physical (PHY) layer. Briefly, the SDAP layer may manage QoS flow handling between the QoS flows and the DRBs. The PDCP layer may manage robust header (de)compression and security between DRBs and RLC channels. The RLC layer may manage (re-)segmentation and error correction through automatic repeat request (ARQ) between logical channels and RLC channels. The MAC layer may manage scheduling/priority handling, (de)multiplexing, and hybrid automatic repeat request (HARQ) processes between logical channels and transport channels. And the PHY layer may manage the processing of the physical data and control channels.

A packet received by a layer from higher layers may be called a service data unit (SDU) of that layer. The packet transmitted by the layer to lower layers is called the PDU of that layer. For example, packets received by a PDCP layer from an SDAP layer are called PDCP SDUs, and packets sent by the PDCP layer to an RLC layer are called PDPC PDUs. In this sense, a packet may be referred to as either an SDU or a PDU depending on the layer perspective. Thus, packets of a PDU set may be referred to as SDAP PDUs or PDCP SDUs. Further, an SDAP PDU may include the information of an application layer PDU and, therefore, the PDU set concept may apply to various protocol layers.

In some embodiments, information may be provided by the core network 112 to the RAN 110 to assist the handling of QoS flows and PDUs. This information may be consistent with that described in 3GPP TR 23.700-60 v18.0.0 (2022-12-21). This information may include semi-static information for both uplink and downlink, PDU set QoS parameters, and dynamic information for downlink.

The semi-static information for both uplink and downlink may be provided via control plane (NGAP). This information may include periodicity for uplink and downlink traffic of the QoS Flow via time sensitive communications assistance information (TSCAI) / time sensitive communications assistance container (TSCAC); and traffic jitter information (e.g. jitter range) associated with each periodicity of the QoS flow.

The PDU set QoS parameters may include a PDU Set Error Rate (PSER) to define an upper bound for the rate of PDU Sets that have been processed by the sender of a link layer protocol but that are not successfully delivered by the corresponding receiver to the upper layer. See, for example, 3GPP TR 23.700-60. In some instances, a PDU set may be considered as successfully delivered when all PDUs of a PDU Set are delivered successfully. In other instances, other definitions of successful delivery may be made.

The PDU set QoS parameters may further include a PDU Set Delay Budget (PSDB) that defines a time between reception of a first PDU and successful delivery of a last-arrived PDU of a PDU Set. See, for example, 3GPP TR 23.700-60. The PSDB may be an optional parameter in various embodiments.

The PDU set QoS parameters may further include a PDU Set Integrated Handling Indication (PSIHI) to indicate whether all PDUs in the PDU sets are needed by an application layer. If PSIHI is set to TRUE, it is pointless for the UE 104 to continue transmit the remaining PDUs of a PDU set when one of the PDUs is discarded. Therefore, the whole PDU set can be discarded to save radio resources.

The dynamic information may be provided by user plane (e.g., a GTP-U header). This information may include: a PDU set sequence number (SN); a PDU set size (in bytes); a PDU SN within a PDU Set; an end PDU of the PDU Set indication; a PDU set importance; and an end of data burst indication in the header of a last PDU of the data burst. The PDU set importance (PSI) may be used to identify a relative importance of a PDU set compared to other PDU sets within the same QoS flow. For example, an I-frame may be considered as an important PDU set, while a P-frame may be considered as less important. There are 16 levels of PSI, and some exemplary guidelines about how the PSI of a PDU Set should be assigned are given in TS 26.522 v18.1.0 (July 12, 2024).

In some embodiments, PDU set discarding, motivated by PSIHI, may be employed by a transmitting device. The PDU set discarding may be similar to that described in 3GPP TR 38.835 v18.0.1 (2023-04-05). For example, in some instances a threshold number of PDUs of a PDU set may be desired for a receiving application layer to use the unit of information. The threshold number may be one or more than one. If PDU set discarding is configured and a transmitting device determines, for example, the number of PDUs of a PDU set are lost/discarded exceeds the threshold number, the transmitting device may discard the remaining PDUs of the PDU set without transmission in order to free up radio resources. In some embodiments, a PDU may be determined to be lost/discarded if it is not successfully transmitted prior to expiration of the PDU's discard timer. A PDU may be discarded as described herein or for other reasons, e.g., the PDU depends on another PDU that was lost.

Each PDCP SDU may maintain its own discard timer. This is the case even for PDCP SDUs belonging to the same PDU Set. PDCP SDUs belonging to the same PDU set do not necessarily arrive at the same time. This may be due to, for example, uplink (UL) jitter in tethered use cases, where packets experience different jitter before reaching the UE. Thus, each PDCP SDU may have different remaining times, even if they belong to the same PDU set. PDU set discarding may be configured when the Application layer can only make use of a PDU set when all packets of the PDU Set are received. To make sure data is useful for the Application layer, it is beneficial for all packets of the PDU set to be transmitted immediately despite the remaining time of each individual PDCP SDU.

With respect PDU set discarding, various aspects are defined in 3GPP TS 38.331 v18.2.0 (July 11, 2024) and 3GPP TS 38.323 v18.2.0 (July 12, 2024). For example, TS 38.323 defines SDU discarding by a PDCP entity. In particular, section 5.3 of TS 38.323 describes that "when *discardTimer* or *discardTimerForLowImportance* expires for a PDCP SDU, the transmitting entity shall: if *pdu-SetDiscard* is configured: discard all PDCP SDUs belonging to the PDU Set to which the PDCP SDU belongs along with the corresponding PDCP Data PDUs." TS 38.331 defines an RRC parameter, *pdu-SetDiscard* that, if set to TRUE, indicates that the "UE shall perform PDU set based discarding for this PDCP entity." This parameter may be configured for a DRB. TS 38.331 also defines RRC parameters to configure the two discard timers (for example, *discardTimer* and *discardTimerForLowImportance*)*.* The *discardTimer* may be consider the default discard timer and the *discardTimerForLowImportance* may be considered the special discard timer, which is always shorter than the default discard timer. In some instances, the network may configure the special discard timer as zero, which will result in the UE 104 directly discarding a packet.

The particular discard timer associated with a packet may be based on packet importance. For example, according to 3GPP TS 38.323, there are situations in which different discard timer values are applied in accordance with an importance of a packet arriving at an access stratum (AS) buffer. For example, section 5.2.1 of 3GPP TS 38.323 describes "[a]t reception of a PDCP SDU from upper layers, the transmitting PDCP entity shall: if *discardTimerForLowImportance* is configured and PSI based SDU discard is activated, and the PDCP SDU belongs to a low importance PDU set: - start the *discardTimerForLowImportance* associated with this PDCP SDU; - else: - start the *discardTimer* associated with this PDCP SDU (if configured)." Thus, if PSI-based discarding is activated for a DRB, the *discardTimer* is used for PDCP SDUs that belong to more important PDU sets, while *discardTimerForLowImportance* is used for PDCP SDUs that belong to less important PDU sets. PSI-based discarding may be used when uplink congestion is detected, and it may be activated/deactivated by the network via a MAC control element (CE).

Since the value of *discardTimerForLowImportance* is always smaller than the value of *discardTimer,* the adjustment of LCH priority will be triggered more often when PSI-based discarding is activated for this DRB. This may not be desirable because PSI-based discarding is activated when there is congestion and triggering LCH priority adjustment too frequently may cause more significant impacts to the performance of other LCHs as the UL resource availability is already scarce. Therefore, embodiments describe how to minimize/alleviate the impacts caused by LCH priority adjustment when PSI-based discarding is activated for the DRB, which implies congestion is already present in the DRB.

In some instances, a network may use PSI for PDU set level packet discarding in presence of congestion. For example, when there is congestion, the less-important PDU sets should be at least more likely/easily to be discarded, while important PDU Sets should not be affected. For uplink, the network may send an indication (via a MAC CE) to activate or de-activate the PSI-based SDU discarding mechanism of up to eight uplink DRBs. The network may send indications to activate PSI-based SDU discarding when, for example, it detects UL congestion. When PSI-based SDU discarding is de-activated on a DRB, the UE applies the same discard timer for all packets regardless of their importance. When PSI-based SDU discarding is activated on a DRB, the UE applies different discarding timers (with different values) to packets belonging to important PDU sets and packets belonging to less-important PDU sets.

In some instances delay-aware scheduling may be applied to reduce packet discarding. For example, if a network knows that a remaining time until discard timer expiry for a PDU is already quite short, delivery of this PDU may be considered urgent and the network may perform a timely resource allocation to ensure the PDU is timely transmitted. This may reduce the number of packets that need to be discarded, and hence improves user experience.

Delay status reporting (DSR) may include an uplink MAC control element (CE) that enables a UE to report the explicit remaining time until expiration of discard timer (per logical channel group (LCG)) and an associated data volume. If no DSR is triggered for an LCH/LCG, a new DSR may be triggered for the LCH/LCG when a shortest remaining-time left for buffered data in uplink is smaller than a configured remaining time threshold. One or more thresholds may be configured per LCG for DSR triggering purposes. If PDU set discarding is configured, a data volume calculation to be reported in the DSR may consider a size of the full remaining PDUs in the PDU set (if any PDU within the PDU set is associated with a remaining time below the threshold). In some instances, single delay information per LCG may be supported as a baseline for DSR. The remaining time, for example, the shortest remaining time in the LCG, may be explicitly reported in the DSR. It is anticipated that, in Release 19 3GPP Technical Specifications (TSs), DSR enhancements with multiple remaining time thresholds configured for an LCH/LCG may be introduced, which enables the UE to report more comprehensive information of the buffer delay status.

While such feedback information may allow the network to perform delay-aware scheduling, it may not guarantee that urgent packets can be delivered sooner. For example, the network may choose to skip scheduling if it thinks that the remaining time is already too short. Thus, such information only assists the network to make more judicious decisions in terms of radio resource management.

Release 19 3GPP Technical Specifications (TSs) will require the study of enhancements to delivery of XR data using delay/deadline information to support UL scheduling. This will enable high XR capacity while meeting delay requirements and avoiding excessive delay of delivering PDUs.

Various logical channel prioritization (LCP) enhancements may be based on buffer delay. For example, delay-aware LCP enhancement may be used to resolve an issue of data with a low remaining time being delayed due to data from other LCHs with no delay critical data. As compared to DSR, such enhancements may represent a more proactive mechanism that a UE may apply to minimize UL packet discarding. For delay-aware LCP enhancement, priority of an LCH may be overridden/adjusted based on delay/deadline information. This may be enabled by use of one or more additional priorities configured to an LCH that has, or may have, delay-critical data. If priority of an LCH is adjusted, the adjusted priority may apply to all data within the LCH, or may apply only to the delay-critical data within the LCH. The delay-aware LCP mechanism may be configured in a semi-static way. No dynamic indications may be needed for triggering these delay-aware LCP mechanisms. In some instances, use of delay-aware LCP mechanisms may not prevent non-delay critical data from using an UL grant. Data that is considered delay-critical for purposes of the delay-aware LCP mechanisms may be based on a remaining time threshold used for DSR or it could be a separate remaining time threshold.

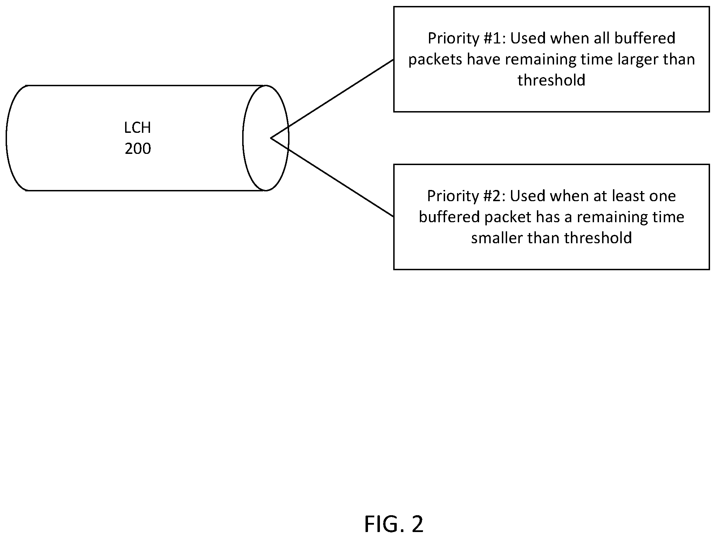

FIG. 2 shows an LCH 200 that is configured with two LCH priorities in accordance with some embodiments. In some embodiments, a network may provide the UE 104 with configuration information via RRC signaling, for example, to semi-statically configure the priorities for the LCH. Generic reference to "network," as used herein, may refer to one or more components of the RAN 110 or the core network 112.

In some embodiments, the configured priorities may include one default LCH priority level (referred to as "Priority #1 in FIG. 2) and one special/boosted LCH priority level (referred to as Priority #2). The LCH 200 may be associated with the default priority when all packets in a buffer of the LCH 200 have a remaining time (for example, remaining time until expiry of respective discard timers) larger than a threshold. When the remaining time of at least one packet in the buffer of the LCH 200 is smaller than the threshold, the UE 104 may switch the LCH priority so that the LCH 200 is associated with the boosted priority. Such LCH priority adaptation can happen even before an uplink (UL) grant is received. This may avoid dynamic adaptation during LCP procedure that may increase complexity. When there are no more packets with remaining time smaller than the threshold in the buffer of the LCH 200, the UE 104 may switch the priority back to the default value. LCH priority adjustment may reduce packet discarding that may otherwise happen to a PDCP SDU when its discard timer expires.

In some embodiments, whether LCH priority adjustment may be triggered may further depend on the status of the other LCHs. For example, even if the remaining time of at least one packet in the buffer of the LCH 200 is smaller than the threshold, the UE 104 may not switch the LCH priority directly if another LCH with a higher default priority is also buffered with at least one packet that is considered delay-critical, or if another LCH with a higher default priority has already boosted its priority. The UE 104 may wait until the delay-critical packet in another LCH is transmitted or discarded, before it can adjust the priority of LCH 200 to the boosted priority. In some cases, the UE 104 may further consider if the importance of delay-critical packets buffered in LCH 200 and/or another LCH to determine if the LCH priority adjustment for LCH 200 should be triggered and conducted directly. For example, the UE 104 may directly adjust the priority of LCH 200 if none of the delay-critical packets buffered in another LCH with higher default priority is considered important. As another example, the UE 104 may directly adjust the priority of LCH 200 if at least one packet with remaining time smaller than the threshold buffered in LCH 200 is considered important.

While various embodiments describe an LCH with two priorities, e.g., default and boosted priorities, other embodiments may include configuring the LCH with additional numbers of priorities and switching between the priorities may be done in manners describe herein.

Some embodiments describe triggering LCH priority adjustment based on importance levels associated with various packets. For example, LCH priority adjustment may only be triggered for important packets. The importance of a packet may be determined based on the configured discard timer or on an importance level of an associated PDU set (e.g., PSI). In some embodiments, how the importance of a packet is determined is entirely up to implementation.

In some embodiments, LCH priority adjustment may only be triggered based on remaining time until expiry of the *discardTimer,* but not the remaining time until expiration of the *discardTimerForLowImportance.* Thus, if the remaining time until expiration of *discardTimer* for a buffered packet drops below a threshold, the UE 104 may trigger an LCH priority adjustment. The LCH priority adjustment may cause the LCH priority to be adjusted to the alternative LCH priority for performing subsequent LCP procedures. Conversely, if the remaining time until expiration of *discardTimerForLowImportance* for a buffered packet drops below the threshold, the UE 104 does not trigger LCH priority adjustment, and the LCH priority should stay as the default value. This may be applicable when PSI-based discarding mechanism is activated (and hence *discardTimerForLowImportance* is applied for some PDCP SDUs).

In some embodiments, LCH priority adjustment may only be triggered if the remaining time until discarding of a PDCP SDU belonging to a more important PDU Set drops below a threshold. In this case, the UE 104 may trigger the LCH priority adjustment to change the LCH priority to the alternative LCH priority for performing subsequent LCP procedures. Conversely, if the remaining time until discarding of a PDCP SDU belonging to a less important PDU Set drops below the threshold, the UE 104 does not trigger LCH priority adjustment and the LCH priority should stay as the default value. This may be applicable even if PSI-based discarding mechanism is not activated (for example, *discardTimer* is applied for all PDCP SDUs).

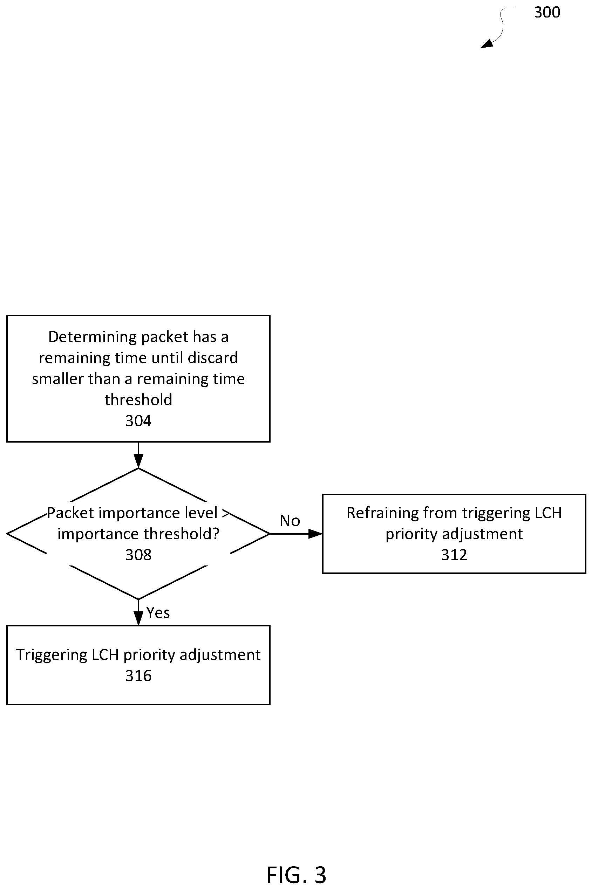

FIG. 3 illustrates an operation flow/algorithmic structure in accordance with some embodiments. The operation flow/algorithmic structure 300 may be performed by UE 104, UE 1100, or components therein, for example, baseband processor 1104A.

The operation flow/algorithmic structure 300 may include, at 304, determining a packet has a remaining time until discard smaller than a remaining time threshold. The packet may be in a buffer of an LCH. The remaining time may be tracked based on a discard timer associated with the packet and started when a PDCP entity receives a PDCP SDU from an upper layer.

The operation flow/algorithmic structure 300 may further include, at 308, determining whether the packet has an importance greater than a predetermined threshold importance level (or simply "importance threshold"). In some embodiments, an importance threshold may define two levels of importance, for example, a low importance and a high importance. However, in other embodiments, other numbers of importance thresholds may be used to define other numbers of importance levels. While embodiments describe a higher importance being greater than an importance threshold, this may not necessarily strictly correspond to an importance level. For example, in some cases an increase in importance level may correspond to a decreased importance. In other embodiments, an increase in importance level may correspond to an increased importance. Further, in some embodiments, the packet importance level is not necessarily determined based on any importance threshold.

In some embodiments, the importance of the packet may be based on discard timer configuration. For example, the packet may be determined to have an importance greater than the importance threshold if PSI-based discarding activated and the packet has started a *discardTimer* upon its arrival. If PSI-based discarding is activated and the packet has started a *discardTimerLowImportance* upon its arrival, the packet may be determined to have an importance less than the importance threshold.

In some embodiments, the importance of the packet may be based on associated PDU sets. For example, the packet may be determined to have an importance greater than the importance threshold if it associated with a PDU set having a relatively high importance. Conversely, the packet may be determined to have an importance less than the importance threshold if it associated with a PDU set having a relatively low importance.

If, at 308, it is determined that the packet importance level is not greater than the importance threshold, the operation flow/algorithmic structure 300 may advance to refraining from triggering an LCH priority adjustment at 312. In this case, operation may continue using existing priority (for example, default LCH priority).

If, at 308, it is determined that the packet importance level is greater than the importance threshold, the operation flow/algorithmic structure 300 may advance to triggering an LCH priority adjustment at 316. In this case, a PDCP entity may provide an indication to the MAC entity to increase an LCH priority to a boosted priority. Subsequently, one or more packets of the logical channel may be transmitted with the increased priority. This may be done by generating one or more MAC PDUs using a LCP procedure based on the increased logical channel priority. The MAC PDUs may then be transmitted on UL resources. LCP procedures may be similar to that described in section 5.4.3.1 of 3GPP TS 38.321 v18.2.0 (2024-07-12).

In some embodiments, the importance level of the packet may be used for selection between multiple priorities associated with an LCH.

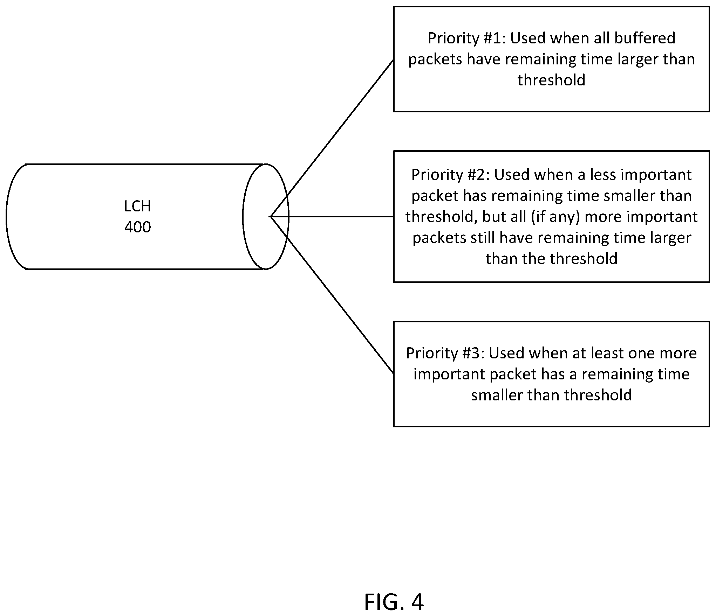

FIG. 4 shows an LCH 400 that is configured with three LCH priorities in accordance with some embodiments. In some embodiments, a network may provide the UE 104 with configuration information via RRC signaling, for example, to semi-statically configure the priorities for the LCH. Based on the configuration, the LCH 400 may be associated with priority #1, priority #2, or priority #3. Priority #1, which may be a default priority, may be used when all buffered packets have a remaining time until discard larger than a predetermined remaining time threshold. Priority #2, which may be a first alternative priority, may be used when a relatively less important packet has a remaining time until discard smaller than a predetermined remaining time threshold, but all (if any) relatively more important packets still have a remaining time until discard larger than a predetermined remaining time threshold. Priority #3, which may be a second alternative priority, may be used when at least one relatively more important packet has a remaining time until discard smaller than a predetermined remaining time threshold.

LCH priority adjustment may be triggered when a remaining time until discarding (based on either *discardTimer* or *discardTimerForLowImportance*) of any packet drops below a threshold. However, the UE 104 may select the priority of this LCH based on an importance of the packet triggered LCH priority adjustment or an importance of any packet(s) present in the buffer (for example, whether the packet triggered LCH priority adjustment is configured with *discardTimer* or *discardTimerForLowlmportance* or belongs to an important PDU set or not).

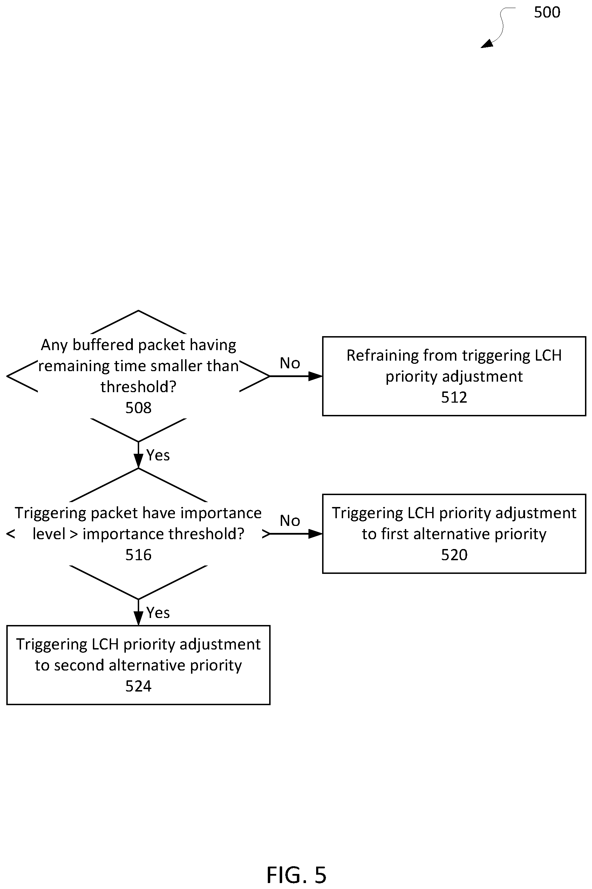

FIG. 5 illustrates an operation flow/algorithmic structure 500 in accordance with some embodiments. The operation flow/algorithmic structure 500 may be performed by UE 104, UE 1100, or components therein, for example, baseband processor 1104A.

The operation flow/algorithmic structure 500 may include, at 508, determining whether any buffered packets have a remaining time until discarding smaller than a threshold.

If it is determined, at 508, that no buffered packets have a remaining time until discarding smaller than the threshold, the operation flow/algorithmic structure 500 may advance to refraining from triggering LCH priority adjustment at 512. In this case, operation may continue using existing priority (for example, default LCH priority).

If, at 508, it is determined at least one buffered packet is a triggering packet (for example, has a remaining time until discarding smaller than the threshold), the operation flow/algorithmic structure 500 may advance to determining whether any packet in the buffer has an importance level greater than an importance threshold at 516. The importance determination may be made with respect to triggering packet (e.g., the one with remaining time smaller than threshold) or any other packet in the buffer.

If, at 516, it is determined that no packets have an importance level greater than the importance threshold, the operation flow/algorithmic structure 500 may advance to triggering an LCH priority adjustment to the first alternative priority at 520. In this case, a PDCP entity may provide an indication to the MAC entity to increase an LCH priority to the first alternative priority. Subsequently, one or more packets of the logical channel may be transmitted with the first alternative priority.

If, at 516, it is determined that a buffered packet has an importance level greater than the importance threshold, the operation flow/algorithmic structure 500 may advance to triggering an LCH priority adjustment to the second alternative priority at 524. In this case, a PDCP entity may provide an indication to the MAC entity to increase an LCH priority to the second alternative priority. Subsequently, one or more packets of the logical channel may be transmitted with the second alternative priority.

In some embodiments, different remaining time thresholds may be configured for packets with different importances. For example, different remaining time thresholds may be applied for: packets belonging to PDU sets with different importances; or packets associated with different discard timers (for example, *discardTimer* or *discardTimerForLowImportance*).

For packets with a relatively high importance, the remaining time threshold may be set to be higher. This may cause LCH priority adjustment to be triggered more quickly. However, for packets with a relatively low importance, the remaining time threshold may be set to be lower. This may cause LCH priority adjustment to be triggered less quickly. For example, LCH priority adjustment may be triggered by low-importance packets only if the packet would be discarded fairly soon. This may be applicable even if PSI-based discarding mechanism is not activated (for example, when *discardTimer* is applied for all PDCP SDUs).

If the PSI-based discarding mechanism is activated, some embodiments may have different remaining time thresholds for the different discard timers. For example, when a PDCP entity receives a packet associated with a *discardTimer,* the PDCP entity may start the *discardTimer* upon receipt of the packet and use a relatively larger remaining time threshold for this packet to trigger LCH priority adjustment. However, when a PDCP entity receives a packet associated with a *discardTimerForLowImportance,* the PDCP entity may start the *discardTimerForLowImportance* upon receipt of the packet and use a relatively smaller remaining time threshold for this packet to trigger LCH priority adjustment.

In some embodiments, differentiated remaining time thresholds may be used with differentiated alternative LCH priorities discussed with respect to FIG. 5, for example. In this manner, both different alternative LCH priorities and different remaining time thresholds may be applied for packets with different importance.

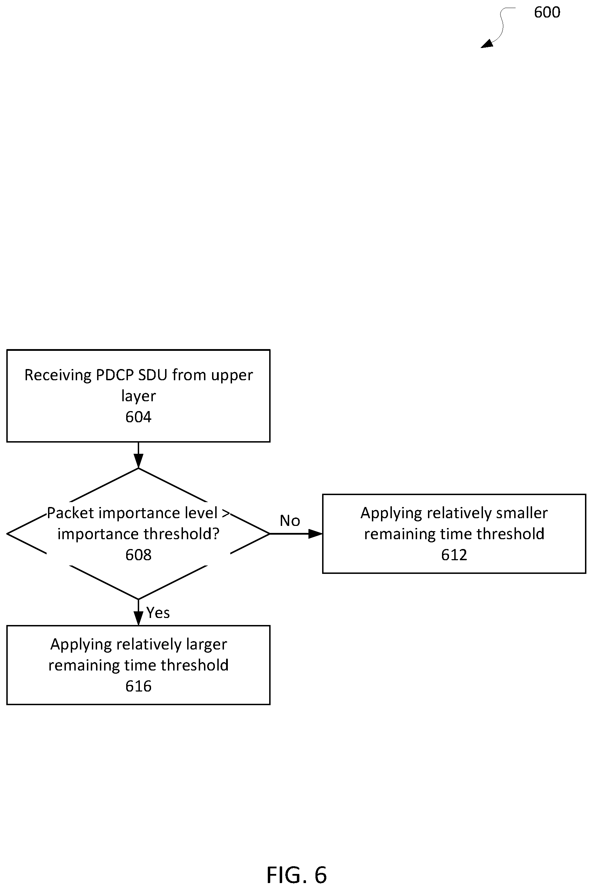

FIG. 6 illustrates an operation flow/algorithmic structure 600 in accordance with some embodiments. The operation flow/algorithmic structure 600 may be performed by UE 104, UE 1100, or components therein, for example, baseband processor 1104A.

The operation flow/algorithmic structure 600 may include, at 604, receiving a PDCP SDU from an upper layer. The receiving at 604 may be performed by a PDCP entity.

The operation flow/algorithmic structure 600 may further include, at 608, determining whether the PDCP SDU has a packet importance greater than an importance threshold.

If, at 608, it is determined that the packet importance level is not greater than the importance threshold, the operation flow/algorithmic structure 600 may advance to 612, which includes applying a relatively smaller remaining time threshold for this PDCP SDU to trigger LCH priority adjustment.

If, at 608, it is determined that the packet importance level is greater than the importance threshold, the operation flow/algorithmic structure 600 may advance to 616, which includes applying a relatively larger remaining time threshold for this PDCP SDU to trigger LCH priority adjustment.

Some embodiments describe various other aspects associated with LCH priority adjustments. For example, when LCH priority adjustment is triggered (e.g. by any triggering conditions, including the conditions discussed elsewhere herein), the adjusted priority may be based on one or more of the following options. In a first option, the priority level of a logical channel may be offset by a fixed value. The level of adjustment may be fixed in a 3GPP TS, for example. No signaling may be required in this case. In a second option, the network may configure a priority adjustment by using a newly defined RRC parameter, which may be referred to as *alternatePriority.* In some embodiments, the *alternatePriority* may represent a replacement of an existing priority level for the logical channel. That is, the alternative priority of a LCH is: *priority* = *alternatePriority.* In other embodiments, the *alternatePriority* may represent an addendum, or offset, to the existing priority level. That is, the alternative priority of a LCH is: priority = priority - alternatePriority. In 3GPP TSs, a larger priority value may correspond to a lower priority; however, in various implementations, a larger priority value may correspond to a higher priority. In some embodiments, the *alternatePriority* may be used to increase priority, whether that corresponds to an increase or decrease in priority level.

After LCH priority is adjusted (for example, triggered by any triggering conditions, including the conditions mentioned), if another LCH (for which the priority level was unmodified) has the same priority level as adjusted priority level, the UE 104 may need to differentiate the two LCH priorities for LCP purposes. This may be done in any of the following manners. According to a first option, the UE 104 may: prioritize LCHs as in legacy (for example, based on UE implementation). According to a second option, the UE 104 may always prioritize the LCHs with adjusted priority over the LCHs with default (unmodified) priority. According to a third option, the UE 104 may always prioritize the LCHs with default (unmodified) priority over the LCHs with adjusted priority. According to a fourth option, the UE 104 may always prioritize the LCHs with a higher or a lower index.

Some embodiments describe improvements to PSI-based discarding operation.

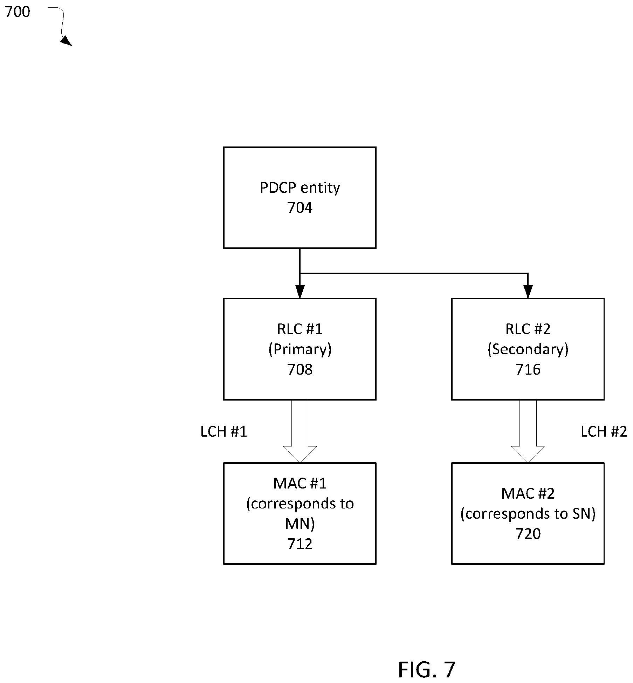

FIG. 7 illustrates protocol entities 700 of the UE 104 illustrating PSI-based discarding in 5G NR dual connectivity (DC) in accordance with some embodiments. The entities 700 provide for a split-bearer scenario in which a radio bearer is associated with different MAC entities and RLC entities. For example, RLC entity #1 708 and MAC entity #1 712 may be associated with a master node (MN) and may be configured with LCH #1, while RLC entity #2 720 and MAC entity #2 724 may be associated with a secondary node (SN) and may be configured with LCH #2.

As previously discussed, the network may send instructions for activating/deactivating PSI-based discarding. This may be done by sending a MAC CE. Each bit in the MAC CE may correspond to a DRB and may indicate whether PSI-based SDU discard is activated or deactivated for that DRB. Given that PSI-based discarding may be configured based on a network congestion status, and the congestion status may vary between the MN and the SN, the MN and SN may send contradictory instructions for activation/deactivation of PSI-based discard for a DRB. Various embodiments describe how the UE 104 should behave in these instances. For example, embodiments describe whether the UE 104 is to activate PSI-based discarding for this DRB and apply different discard timer for packets with different importances).

When a DRB associated with two MAC entities (for example, in NR-DC) is configured with PSI-based SDU discarding, one or more of the following options may be used to define UE-behavior.

In a first option, the UE 104 only follows PSI-based SDU discarding activation/deactivation MAC CE from the MN. With this option, the UE 104 will always ignore any PSI-based SDU discarding activation/deactivation MAC CE from the SN.

In a second option, the UE 104 only follows PSI-based SDU discarding activation/deactivation MAC CE from the SN. With this option, the UE 104 will always ignore any PSI-based SDU discarding activation/deactivation MAC CE from the SN.

In a third option, the UE 104 will only activate PSI-based SDU discarding for the DRB, when both MN and SN have instructed the UE, via respective MAC CEs, to activate PSI-based SDU discarding for this DRB.

In a fourth option, the UE 104 will only activate PSI-based SDU discarding for the DRB, when at least one of MN and SN has instructed the UE, via a respective MAC CE, to activate PSI-based SDU discarding for this DRB.

In a fifth option, the UE 104 will only de-activate PSI-based SDU discarding for the DRB when both MN and SN have instructed the UE, via respective MAC CEs, to de-activate PSI-based SDU discarding for this DRB.

In a sixth option, the UE 104 will only de-activate PSI-based SDU discarding for the DRB when at least one of MN and SN has instructed the UE, via a respective MAC CE, to de-activate PSI-based SDU discarding for this DRB.

In a seventh option, if PSI-based SDU discarding for the DRB is only activated by the SN, the UE 104 may or may not activate PSI-based SDU discarding, but should avoid submitting PDCP PDU to the RLC entity corresponding to SN. The UE 104 may avoid submitting PDCP PDU to the RLC entity corresponding to the SN regardless of whether the data volume exceeds a threshold. In some embodiments, the UE 104 may avoid submitting all packets to the RLC entity corresponding to the SN. In other embodiments, the UE 104 may avoid submitting a subset of packets (e.g., non-important packets) to the RLC entity corresponding to the SN.

In an eighth option, if PSI-based SDU discarding for the DRB is only activated by the MN, the UE 104 may or may not activate PSI-based SDU discarding, but should avoid submitting PDCP PDU to the RLC entity corresponding to MN. The UE 104 may avoid submitting PDCP PDU to the RLC entity corresponding to the MN regardless of whether the data volume exceeds a threshold. In some embodiments, the UE 104 may avoid submitting all packets to the RLC entity corresponding to the MN. In other embodiments, the UE 104 may avoid submitting a subset of packets (e.g., non-important packets) to the RLC entity corresponding to the MN.

In a ninth option, the MN may pre-configure the UE 104 to behave according to any of the options above (including any combination).

As discussed above, Release 18 specifications classify packets into two groups for PSI-based discarding, which may generally be referred to as more important packets and less important packets. Further, it is described that the UE should immediately discard the less-important packets when their *discardTimerForLowImportance* is expired. However, from an Application point-of-view, the importance level of packets may have a finer granularity. For example, TS 26.522 v18.1.0 (July 12, 2024) defines 16 PSI levels. Two discard timer values may be insufficient to optimize the discarding mechanisms for 16 PSI levels. Further, defining too many discard timer values for a DRB may also be complicated from specification point of view. It may be more desirable for the UE 104 to decide by itself how packets of each PSI level should be handled. This may be based on some context information (for example, based on some interactions with Application). This may be suitable for scenarios where congestion is not that severe. Thus, embodiments describe how to enable a more UE-centric discarding mechanism based on the existing PSI-based discarding framework.

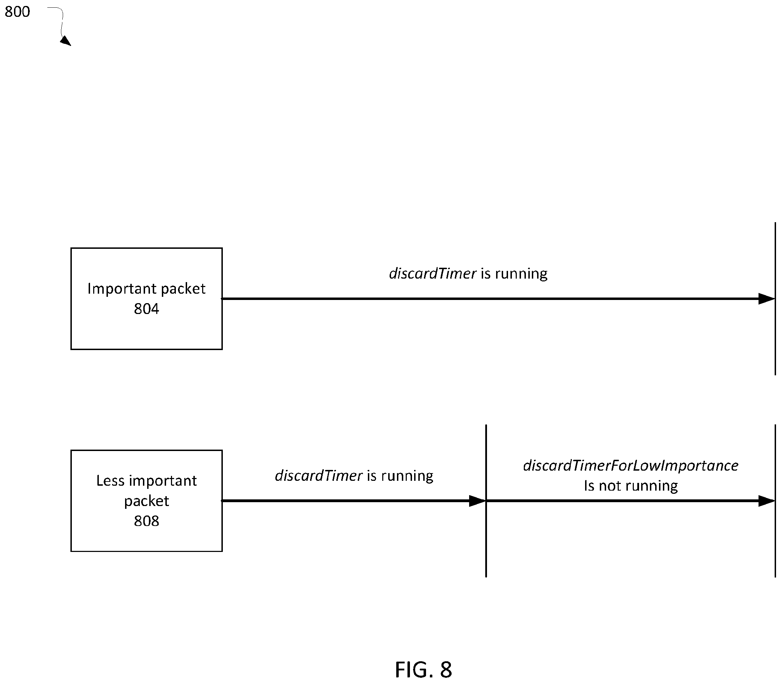

FIG. 8 illustrates discard timers for a more important packet 804 and a less important packet 808 in accordance with some embodiments. For the more important packet, as described above, when it is received from an upper layer the *discardTimer* may be started. If the *discardTimer* expires without the more important packet 804 being transmitted, the more important packet 804 will be discarded. This behavior may be the same as defined in legacy operation.

However, with respect to the less important packet, the network may configure the UE behavior upon expiration of the *discardTimerForLowImportance* to either: discard the less important packet 808 (similar to legacy operation); or make its own determination of whether to discard the less important packet (this may be enabled when congestion is less severe). Thus, the UE 104 may determine whether it should continue to attempt to transmit the less important packet 808 for a period of time. In some embodiments, the extra period of time may be until expiration of a *discardTimer.* For this option, the UE 104 may start both timers when the less important packet 808 is received, or it may start a timer with a difference between the two timers when the *discardTimerForLowImportance* expires. In other embodiments, the additional time that the UE 104 attempts to transmit the less important packet 808 beyond expiration of the *discardTimerForLowImportance* may be other values.

The UE 104 may decide whether to attempt to transmit the less important packet 808 beyond expiration of the *discardTimerForLowImportance* based on UE's context information.

In some embodiments, the definition of *discardTimerForLowImportance* may be updated to account for the option of the UE to extend the period before it discards the packet. For example, *discardTimerForLowImportance* may be defined as "[t]he minimum length of time that a less important packet can be kept in the buffer since its arrival."

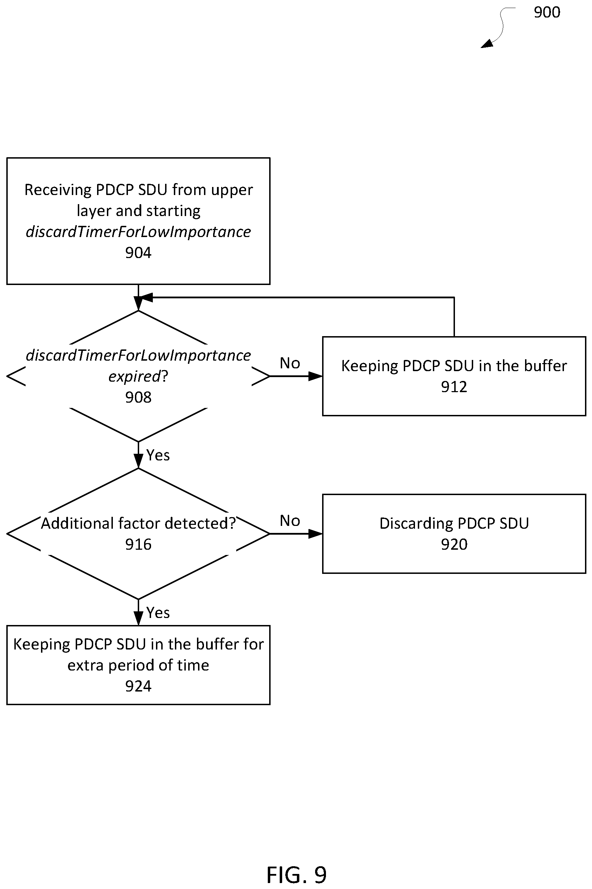

FIG. 9 illustrates an operation flow/algorithmic structure 900 in accordance with some embodiments. The operation flow/algorithmic structure 900 may be performed by UE 104, UE 1100, or components therein, for example, baseband processor 1104A.

The operation flow/algorithmic structure 900 may include, at 904, receiving a PDCP SDU from an upper layer and starting a *discardTimerForLowImportance.* The PDCP SDU may correspond to a less important packet. In some embodiments, a *discardTimer* may also be started at this time

The operation flow/algorithmic structure 900 may further include, at 908, determining whether *discardTimerForLowImportance* expires. If the *discardTimerForLowImportance* has not expired, the operation flow/algorithmic structure 900 may advance to keeping the PDCP SDU in the buffer at 912. Further attempts to transmit the PDCP SDU may be undertaken while *discardTimerForLowImportance* is not expired.

If it is determined, at 908, that *discardTimerForLowImportance* expires, the operation flow/algorithmic structure 900 may advance to determining whether an additional factor is detected at 916. In some embodiments, the determination at 916 may only be performed if the network has configured the option for the UE to determine whether a packet is to be discarded *discardTimerForLowImportance* expires.

The additional factors may include an importance level of the packet (e.g., a PSI of the PDCP SDU); a battery power status; information from an application associated with the packet; a thermal condition of a device; context information from the UE 104; or a loading of the DRB.

If it is determined, at 916, that the additional factor is not detected, the operation flow/algorithmic structure 900 may advance to discarding the PDCP SDU at 920.

If it is determined, at 916, that the additional factor is detected, the operation flow/algorithmic structure 900 may advance to keeping the PDCP SDU in buffer for extra period of time at 920. The extra period of time, which may correspond to a difference between *discardTimer* and *discardTimerForLowImportance,* may be used for additional attempts to transmit the PDCP SDU.

As discussed above, PSI-based discarding can be activated or de-activated by MAC CE. According to the Release 18 specifications, when this is activated, the UE should apply a fixed value of *discardTimerForLowImportance* (which is pre-configured in RRC) for less important packets. However, the severity of congestion changes from time to time. Thus, always using a fixed value of *discardTimerForLowImportance* may not be sufficiently flexible to cope with such dynamic nature. Therefore, some embodiments describe how to enable a more flexible and dynamic control for the value of *discardTimerForLowImportance.*

FIG. 10 illustrates a MAC CE 1000 that may be used to activate/deactivate PSI-based SDU discarding in accordance with some embodiments.

As shown, MAC CE 1000 may include eight *discardTimerForLowImportance* (DTLI) fields that may respectively correspond to eight DRBs. DTLI_i represents the timer value of *discardTimerForLowImportance* to be applied for DRB i. For example, if 2-bits are used for each field, the following values may be defined: '00' to indicate PSI-based discard is deactivated for this DRB; '01' to indicate PSI-based discard is activated for this DRB and the value for *discardTimerForLowImportance* is 0 milliseconds (ms); '10' to indicate PSI-based discard is activated for this DRB and the value for *discardTimerForLowImportance* is 20 ms; and '11' to indicate PSI-based discard is activated for this DRB and the value for *discardTimerForLowImportance* is 40 ms. Various other timer values may be configured

In some embodiments, a list of candidate *discardTimerForLowImportance* values corresponding to different code points in the MAC CE for a DRB may be preconfigured by RRC. This may be included in, for example, a PDCP-config information element (IE).

Use of MAC CE 1000 to active/deactive PSI-based SDU discarding may be applicable for either the legacy definition of *discardTimerForLowImportance* (e.g., "[t]he maximum length of time that a less important packet can be kept in the buffer since its arrival") or the more flexible definition described above with respect to FIG. 9 (e.g., "[t]he minimum length of time that a less important packet can be kept in the buffer since its arrival").

Using the MAC CE 1000 may allow for more flexibility with respect to the value of *discardTimerForLowImportance* that should be applied for a DRB. This may help to cope with the dynamic nature of congestion status. For example, a longer *discardTimerForLowImportance* may be used when the congestion is less severe.

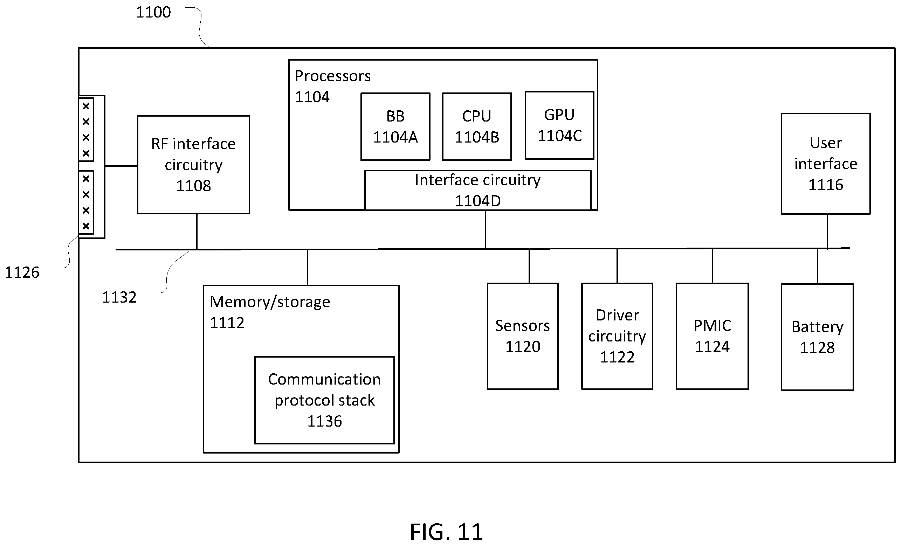

FIG. 11 illustrates a UE 1100 in accordance with some embodiments. The UE 1100 may be similar to and substantially interchangeable with UE 114.

The UE 1100 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 1100 may include processors 1104, RF interface circuitry 1108, memory/storage 1112, user interface 1116, sensors 1120, driver circuitry 1122, power management integrated circuit (PMIC) 1124, antenna 1126, and battery 1128. The components of the UE 1100 may be implemented as integrated circuits (ICs), portions thereof, discrete electronic devices, or other modules, logic, hardware, software, firmware, or a combination thereof. The block diagram of FIG. 11 is intended to show a high-level view of some of the components of the UE 1100. However, some of the components shown may be omitted, additional components may be present, and different arrangement of the components shown may occur in other implementations.

The components of the UE 1100 may be coupled with various other components over one or more interconnects 1132, which may represent any type of interface, input/output, bus (local, system, or expansion), transmission line, trace, or optical connection that allows various circuit components (on common or different chips or chipsets) to interact with one another.

The processors 1104 may include processor circuitry such as, for example, baseband processor circuitry (BB) 1104A, central processor unit circuitry (CPU) 1104B, and graphics processor unit circuitry (GPU) 1104C. The processors 1104 may include any type of circuitry or processor circuitry that executes or otherwise operates computer-executable instructions, such as program code, software modules, or functional processes from memory/storage 1112 to cause the UE 1100 to perform LCH priority transitions as described herein. The processors 1104 may also include interface circuitry 1104D to communicatively couple the processor circuitry with one or more other components of the UE 1100.

In some embodiments, the baseband processor 1104A may access a communication protocol stack 1136 in the memory/storage 1112 to communicate over a 3GPP compatible network. In general, the baseband processor 1104A may access the communication protocol stack 1136 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 1108.

The baseband processor 1104A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1112 may include one or more non-transitory, computer-readable media that includes instructions (for example, communication protocol stack 1136) that may be executed by one or more of the processors 1104 to cause the UE 1100 to perform LCH priority adjustment or packet discard operations as described herein.

The memory/storage 1112 includes any type of volatile or non-volatile memory that may be distributed throughout the UE 1100. In some embodiments, some of the memory/storage 1112 may be located on the processors 1104 themselves (for example, memory/storage 1112 may be part of a chipset that corresponds to the baseband processor 1104A), while other memory/storage 1112 is external to the processors 1104 but accessible thereto via a memory interface. The memory/storage 1112 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1108 may include transceiver circuitry and a radio frequency front module (RFEM) that allows the UE 1100 to communicate with other devices over a radio access network. The RF interface circuitry 1108 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna 1126 and proceed to filter and amplify (with a low-noise amplifier) the signal. The signal may be provided to a receiver of the transceiver that down-converts the RF signal into a baseband signal that is provided to the baseband processor of the processors 1104.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1126.

In various embodiments, the RF interface circuitry 1108 may be configured to transmit/receive signals in a manner compatible with NR access technologies.

The antenna 1126 may include antenna elements to convert electrical signals into radio waves to travel through the air and to convert received radio waves into electrical signals. The antenna elements may be arranged into one or more antenna panels. The antenna 1126 may have antenna panels that are omnidirectional, directional, or a combination thereof to enable beamforming and multiple input, multiple output communications. The antenna 1126 may include microstrip antennas, printed antennas fabricated on the surface of one or more printed circuit boards, patch antennas, or phased array antennas. The antenna 1126 may have one or more panels designed for specific frequency bands including bands in FR1 or FR2.

The user interface 1116 includes various input/output (I/O) devices designed to enable user interaction with the UE 1100. The user interface 1116 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1100.

The sensors 1120 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1122 may include software and hardware elements that operate to control particular devices that are embedded in the UE 1100, attached to the UE 1100, or otherwise communicatively coupled with the UE 1100. The driver circuitry 1122 may include individual drivers allowing other components to interact with or control various input/output (I/O) devices that may be present within, or connected to, the UE 1100. For example, driver circuitry 1122 may include a display driver to control and allow access to a display device, a touchscreen driver to control and allow access to a touchscreen interface, sensor drivers to obtain sensor readings of sensors 1120 and control and allow access to sensors 1120, drivers to obtain actuator positions of electro-mechanic components or control and allow access to the electro-mechanic components, a camera driver to control and allow access to an embedded image capture device, audio drivers to control and allow access to one or more audio devices.

The PMIC 1124 may manage power provided to various components of the UE 1100. In particular, with respect to the processors 1104, the PMIC 1124 may control power-source selection, voltage scaling, battery charging, or DC-to-DC conversion.

A battery 1128 may power the UE 1100, although in some examples the UE 1100 may be mounted deployed in a fixed location and may have a power supply coupled to an electrical grid. The battery 1128 may be a lithium ion battery, a metal-air battery, such as a zinc-air battery, an aluminum-air battery, a lithium-air battery, and the like. In some implementations, such as in vehicle-based applications, the battery 1128 may be a typical lead-acid automotive battery.

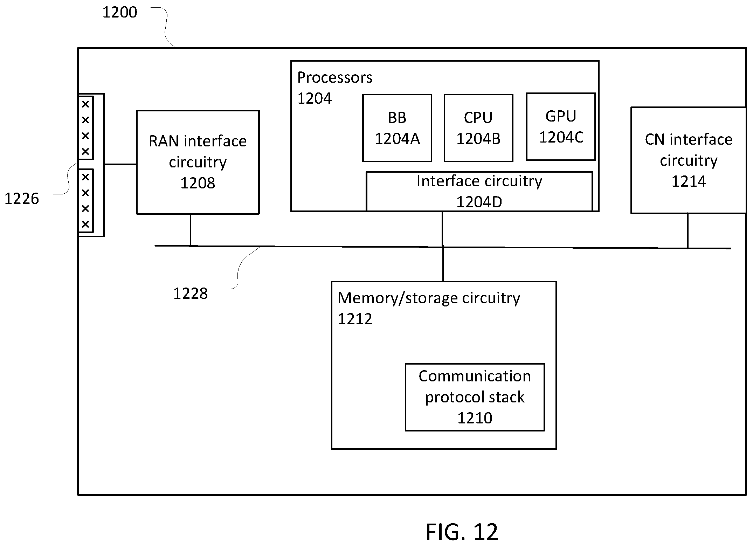

FIG. 12 illustrates a network device 1200 in accordance with some embodiments. The network device 1200 may be similar to, and substantially interchangeable with, the base station 108.

The network device 1200 may include processors 1204, RF interface circuitry 1208 (if implemented as a base station), core network (CN) interface circuitry 1214, memory/storage circuitry 1212, and antenna structure 1226.

The components of the network device 1200 may be coupled with various other components over one or more interconnects 1228.

The processors 1204, RF interface circuitry 1208, memory/storage circuitry 1212 (including communication protocol stack 1210), antenna structure 1226, and interconnects 1228 may be similar to like-named elements shown and described with respect to FIG. 11.

The processors 1204 may include processor circuitry such as, for example, baseband processor circuitry (BB) 1204A, central processor unit circuitry (CPU) 1204B, and graphics processor unit circuitry (GPU) 1204C. The processors 1204 may include any type of circuitry or processor circuitry that executes or otherwise operates computer-executable instructions, such as program code, software modules, or functional processes from memory/storage circuitry 1212 to cause the network device 1200 to configure a UE as described herein. The processors 1204 may also include interface circuitry 1204D to communicatively couple the processor circuitry with one or more other components of the network device 1200.

The CN interface circuitry 1214 may provide connectivity to a core network, for example, a 5^{th} Generation Core network (5GC) using a 5GC-compatible network interface protocol such as carrier Ethernet protocols, or some other suitable protocol. Network connectivity may be provided to/from the network device 1200 via a fiber optic or wireless backhaul. The CN interface circuitry 1214 may include one or more dedicated processors or FPGAs to communicate using one or more of the aforementioned protocols. In some implementations, the CN interface circuitry 1214 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method comprising: determining a packet in a buffer associated with a logical channel has a remaining time until discard smaller than a remaining time threshold; determining whether the packet has an importance greater than an importance threshold; and determining whether to trigger an adjustment to a priority of the logical channel based on said determining whether the packet has an importance greater than the importance threshold.

Example 2 includes the method of example 1 or some other example herein, wherein determining whether the packet has an importance greater than an importance threshold comprises determining the packet has an importance level greater than the importance threshold and the method further comprises: triggering the adjustment to the priority of the logical channel based on said determining the packet has an importance level greater than the importance threshold.

Example 3 includes the method of claim 2 or some other example herein, wherein determining the packet has an importance greater than a importance threshold comprises: determining the packet is configured with a discard timer associated with the importance greater than the importance threshold.

Example 4 includes the method of example 2 or some other example herein, further comprising: determining protocol data unit set importance (PSI)-based discarding is activated; and determining, based on determining PSI-based discarding is activated, a discard timer configuration is to be used as a basis for determining whether the packet has an importance greater than the importance threshold.

Example 5 includes the method of example 2 or some other example herein, wherein determining the packet has an importance greater than an importance threshold comprises: determining the packet is associated with a protocol data unit (PDU) set having an importance greater than the importance threshold.

Example 6 includes a method comprising: determining a packet in a buffer associated with a logical channel has a remaining time until discard smaller than a remaining time threshold; determining an importance level of the packet; selecting a target priority based on the importance level; and triggering a logical channel priority adjustment to associate the logical channel with the target priority.

Example 7 includes the method of example 6 or some other example herein, further comprising: receiving, via radio resource control (RRC) signaling, a configuration of three or more priorities for the logical channel, wherein a first priority of the three or more priorities is a default priority and a second priority of the three or more priorities is the target priority, wherein the logical channel priority adjustment is to adjust the logical channel from being associated with the default priority to being associated with the target priority.

Example 8 includes the method of example 6 or some other example herein, wherein determining the importance level of the packet is based on an importance level of a protocol data set (PDU) set that includes the packet, or a discard timer configuration for the packet.

Example 9 includes a method comprising: determining an importance level of a packet in a buffer associated with a logical channel; selecting a remaining time threshold based on the importance level; and applying the remaining time threshold to determine whether to trigger a logical channel priority adjustment for the logical channel.

Example 10 includes the method of example 9 or some other example herein, wherein applying the remaining time threshold comprises: determining the packet has a remaining time until discard less than the remaining time threshold; and triggering the logical channel priority adjustment based on said determining the packet has a remaining time until discard less than the remaining time threshold.

Example 11 includes a method comprising: determining a packet in a buffer associated with a logical channel has a remaining time until discard smaller than a remaining time threshold; identifying a priority adjustment configuration; and triggering an adjustment to a priority of the logical channel based on said determining the packet has a remaining time until discard smaller than the remaining time threshold and identifying the priority adjustment configuration.

Example 12 includes the method of example 11 or some other example herein, wherein the priority adjustment configuration is a fixed value, wherein the adjustment to the priority of the logical channel includes increasing a default priority of the logical channel by the fixed value.

Example 13 includes the method of example 11 or some other example herein, further comprising: receiving, from a network via radio resource control (RRC) signaling, the priority adjustment configuration.

Example 14 includes the method of example 13 or some other example herein, wherein the priority adjustment configuration includes an indication of a target priority, wherein the adjustment to the priority of the logical channel includes: associating the logical channel with the target priority.

Example 15 includes a method comprising: determining protocol data unit set importance (PSI)-based service data unit (SDU) discarding is activated; and determining a data radio bearer (DRB) is split between a first media access control (MAC) entity associated with a master node (MN) and a second MAC entity that is associated with a secondary node (SN); and determining whether to follow commands for activating or deactivating protocol data unit set importance (PSI)-based service data unit (SDU) discarding received from the MN via the first MAC entity or from the SN via the second MAC entity.

Example 16 includes the method of example 15 or some other example herein, wherein determining whether to follow commands for activating or deactivating PSI-based SDU discarding received from the MN via the first MAC entity or from the SN via the second MAC entity comprises: determining to follow commands from the MN and to ignore commands from the SN.

Example 17 includes the method of example 15 or some other example herein, wherein determining whether to follow commands for activating or deactivating PSI-based SDU discarding received from the MN via the first MAC entity or from the SN via the second MAC entity comprises: determining to follow commands from the SN and to ignore commands from the MN.

Example 18 includes the method of example 15 or some other example herein, wherein determining whether to follow commands for activating or deactivating PSI-based SDU discarding received from the MN via the first MAC entity or from the SN via the second MAC entity comprises: determining to activate PSI-based SDU discarding only when both the MN and the SN send commands to activate PSI-based SDU discarding; or determining to de-activate PSI-based SDU discarding only when both the MN and the SN send commands to de-activate PSI-based SDU discarding.

Example 19 includes the method of example 15 or some other example herein, wherein determining whether to follow commands for activating or deactivating PSI-based SDU discarding received from the MN via the first MAC entity or from the SN via the second MAC entity comprises: determining to activate PSI-based SDU discarding when at least one node of the MN and the SN sends a command to activate PSI-based SDU discarding; or determining to de-activate PSI-based SDU discarding when at least one node of the MN and the SN sends a command to de-activate PSI-based SDU discarding.

Example 20 includes the method of any one of examples 15-19 or some other example herein, further comprising: determining that PSI-based SDU discarding was activated by the SN; and avoiding, based on said determining that PSI-based SDU discarding was activated by the SN, submission of packet data convergence protocol (PDCP) protocol data units (PDU) to a radio link control (RLC) entity associated with the SN.

Example 21 includes the method of any one of examples 15-19 or some other example herein, further comprising: determining that PSI-based SDU discarding was activated by the MN; and avoiding, based on said determining that PSI-based SDU discarding was activated by the MN, submission of packet data convergence protocol (PDCP) protocol data units (PDU) to a radio link control (RLC) entity associated with the MN.

Example 22 includes the method of any one of examples 15-21 or some other example herein, further comprising: receiving a configuration parameter from a network; and determining whether to follow commands for activating or deactivating PSI-based SDU discarding received from the MN or from the SN based on the configuration parameter.

Example 23 includes a method comprising: receiving a packet from an upper layer; starting a discard timer for low importance (discardTimerForLowImportance) based on receiving the packet; detecting an expiration of the discard timer for low importance; and determining, based on detecting the expiration of the discard timer for low importance and an additional factor, whether to discard the packet.

Example 24 includes the method of example 23 or some other example herein, wherein the additional factor is an importance level of the packet; a battery power status; information from an application associated with the packet; a thermal condition of a device; context information from a user equipment; or a loading of a data radio bearer.

Example 25 includes the method of example 23 or some other example herein, further comprising: starting a discard timer (discardTimer) based on receiving the packet, wherein the discardTimer has a starting value greater than a starting value of the discardTimerForLowImportance.

Example 26 includes the method of example 25 or some other example herein, wherein determining whether to discard the packet comprises: determining not to discard the packet before expiration of the discardTimer.

Example 27 includes a method comprising: receiving a media access control (MAC) control element (CE) with an indicator in a plural-bit field to activate or deactivate protocol data unit set importance (PSI)-based service data unit (SDU) discarding for a data radio bearer (DRB); and activating or deactivating PSI-based SDU discarding based on the indicator.

Example 28 includes the method of example 27 or some other example herein, wherein the indicator is to indicate that PSI-based SDU discarding is activated for the DRB and is further to indicate a value for a discard low importance timer.

Example 29 includes the method of example 28 or some other example herein, wherein the value is a zero milliseconds (ms), 20 ms, or 40 ms.

Example 30 includes the method of example 28 or some other example herein, further comprising: receiving a radio resource control (RRC) value to configure a plurality of candidate values for the discard low importance timer, the plurality of candidate values to respectively correspond to a plurality of codepoints of the plural-bit field.

Another example may include an apparatus comprising means to perform one or more elements of a method described in or related to any of examples 1-30, or any other method or process described herein.

Another example may include one or more non-transitory computer-readable media comprising instructions to cause an electronic device, upon execution of the instructions by one or more processors of the electronic device, to perform one or more elements of a method described in or related to any of examples 1-30, or any other method or process described herein.

Another example may include an apparatus comprising logic, modules, or circuitry to perform one or more elements of a method described in or related to any of examples 1-30, or any other method or process described herein.

Another example may include a method, technique, or process as described in or related to any of examples 1-30, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-30, or portions thereof.

Another example may include a signal as described in or related to any of examples 1-30, or portions or parts thereof.

Another example may include a datagram, information element, packet, frame, segment, PDU, or message as described in or related to any of examples 1-30, or portions or parts thereof, or otherwise described in the present disclosure.

Another example may include a signal encoded with data as described in or related to any of examples 1-30, or portions or parts thereof, or otherwise described in the present disclosure.

Another example may include a signal encoded with a datagram, IE, packet, frame, segment, PDU, or message as described in or related to any of examples 1-30, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-30, or portions thereof.

Another example may include a computer program comprising instructions, wherein execution of the program by a processing element is to cause the processing element to carry out the method, techniques, or process as described in or related to any of examples 1-30, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Further exemplary methods are set out in the following items.
1. A method comprising:
   determining a packet in a buffer associated with a logical channel has a remaining time until discard smaller than a remaining time threshold;
   determining whether the packet has an importance greater than an importance threshold; and
   determining whether to trigger an adjustment to a priority of the logical channel based on said determining whether the packet has an importance greater than the importance threshold.
2. The method of Example 1, wherein determining whether the packet has an importance greater than an importance threshold comprises determining the packet has an importance level greater than the importance threshold and the method further comprises:
   triggering the adjustment to the priority of the logical channel based on said determining the packet has an importance level greater than the importance threshold.
3. The method of Example 2, wherein determining the packet has an importance greater than a importance threshold comprises:
   determining the packet is configured with a discard timer associated with the importance greater than the importance threshold.
4. The method of Example 2, further comprising:
   determining protocol data unit set importance (PSI)-based discarding is activated; and
   determining, based on determining PSI-based discarding is activated, a discard timer configuration is to be used as a basis for determining whether the packet has an importance greater than the importance threshold.
5. The method of Example 2, wherein determining the packet has an importance greater than an importance threshold comprises:
   determining the packet is associated with a protocol data unit (PDU) set having an importance greater than the importance threshold.
6. A method comprising:
   determining a packet in a buffer associated with a logical channel has a remaining time until discard smaller than a remaining time threshold;
   determining an importance level of the packet;
   selecting a target priority based on the importance level; and
   triggering a logical channel priority adjustment to associate the logical channel with the target priority.
7. The method of Example 6, further comprising:
   receiving, via radio resource control (RRC) signaling, a configuration of three or more priorities for the logical channel, wherein a first priority of the three or more priorities is a default priority and a second priority of the three or more priorities is the target priority, wherein the logical channel priority adjustment is to adjust the logical channel from being associated with the default priority to being associated with the target priority.
8. The method of Example 6, wherein determining the importance level of the packet is based on an importance level of a protocol data set (PDU) set that includes the packet, or a discard timer configuration for the packet.
9. A method comprising:
   determining an importance level of a packet in a buffer associated with a logical channel;
   selecting a remaining time threshold based on the importance level; and
   applying the remaining time threshold to determine whether to trigger a logical channel priority adjustment for the logical channel.
10. The method of Example 9, wherein applying the remaining time threshold comrises:
   determining the packet has a remaining time until discard less than the remaining time threshold; and
   triggering the logical channel priority adjustment based on said determining the packet has a remaining time until discard less than the remaining time threshold.
11. A method comprising:
   determining a packet in a buffer associated with a logical channel has a remaining time until discard smaller than a remaining time threshold;
   identifying a priority adjustment configuration; and
   triggering an adjustment to a priority of the logical channel based on said determining the packet has a remaining time until discard smaller than the remaining time threshold and identifying the priority adjustment configuration.
12. The method of Example 11, wherein the priority adjustment configuration is a fixed value, wherein the adjustment to the priority of the logical channel includes increasing a default priority of the logical channel by the fixed value.
13. The method of Example 11, further comprising:
   receiving, from a network via radio resource control (RRC) signaling, the priority adjustment configuration.
14. The method of Example 13, wherein the priority adjustment configuration includes an indication of a target priority, wherein the adjustment to the priority of the logical channel includes:
   associating the logical channel with the target priority.
15. A method comprising:
   determining protocol data unit set importance (PSI)-based service data unit (SDU) discarding is activated; and
   determining a data radio bearer (DRB) is split between a first media access control (MAC) entity associated with a master node (MN) and a second MAC entity that is associated with a secondary node (SN); and
   determining whether to follow commands for activating or deactivating protocol data unit set importance (PSI)-based service data unit (SDU) discarding received from the MN via the first MAC entity or from the SN via the second MAC entity.
16. The method of Example 15, wherein determining whether to follow commands for activating or deactivating PSI-based SDU discarding received from the MN via the first MAC entity or from the SN via the second MAC entity comprises:
   determining to follow commands from the MN and to ignore commands from the SN.
17. The method of Example 15, wherein determining whether to follow commands for activating or deactivating PSI-based SDU discarding received from the MN via the first MAC entity or from the SN via the second MAC entity comprises:
   determining to follow commands from the SN and to ignore commands from the MN.
18. The method of Example 15, wherein determining whether to follow commands for activating or deactivating PSI-based SDU discarding received from the MN via the first MAC entity or from the SN via the second MAC entity comprises:
   determining to activate PSI-based SDU discarding only when both the MN and the SN send commands to activate PSI-based SDU discarding; or
   determining to de-activate PSI-based SDU discarding only when both the MN and the SN send commands to de-activate PSI-based SDU discarding.
19. The method of Example 15, wherein determining whether to follow commands for activating or deactivating PSI-based SDU discarding received from the MN via the first MAC entity or from the SN via the second MAC entity comprises:
   determining to activate PSI-based SDU discarding when at least one node of the MN and the SN sends a command to activate PSI-based SDU discarding; or
   determining to de-activate PSI-based SDU discarding when at least one node of the MN and the SN sends a command to de-activate PSI-based SDU discarding.
20. The method of any one of Examples 15-19, further comprising:
   determining that PSI-based SDU discarding was activated by the SN; and
   avoiding, based on said determining that PSI-based SDU discarding was activated by the SN, submission of packet data convergence protocol (PDCP) protocol data units (PDU) to a radio link control (RLC) entity associated with the SN.
21. The method of any one of Examples 15-19, further comprising:
   determining that PSI-based SDU discarding was activated by the MN; and
   avoiding, based on said determining that PSI-based SDU discarding was activated by the MN, submission of packet data convergence protocol (PDCP) protocol data units (PDU) to a radio link control (RLC) entity associated with the MN.
22. The method of any one of Examples 15-21, further comprising:
   receiving a configuration parameter from a network; and
   determining whether to follow commands for activating or deactivating PSIbased SDU discarding received from the MN or from the SN based on the configuration parameter.
23. A method comprising:
   receiving a packet from an upper layer;
   starting a discard timer for low importance (*discardTimerForLowImportance*) based on receiving the packet;
   detecting an expiration of the discard timer for low importance; and
   determining, based on detecting the expiration of the discard timer for low importance and an additional factor, whether to discard the packet.
24. The method of Example 23, wherein the additional factor is an importance level of the packet; a battery power status; information from an application associated with the packet; a thermal condition of a device; context information from a user equipment; or a loading of a data radio bearer.
25. The method of Example 23, further comprising:
   starting a discard timer (*discardTimer*) based on receiving the packet, wherein the *discardTimer* has a starting value greater than a starting value of the *discardTimer For Low Importance.*
26. The method of Example 25, wherein determining whether to discard the packet comprises:
   determining not to discard the packet before expiration of the *discardTimer.*
27. A method comprising:
   receiving a media access control (MAC) control element (CE) with an indicator in a plural-bit field to activate or deactivate protocol data unit set importance (PSI)based service data unit (SDU) discarding for a data radio bearer (DRB); and
   activating or deactivating PSI-based SDU discarding based on the indicator.
28. The method of Example 27, wherein the indicator is to indicate that PSIbased SDU discarding is activated for the DRB and is further to indicate a value for a discard low importance timer.
29. The method of Example 28, wherein the value is a zero milliseconds (ms), 20 ms, or 40 ms.
30. The method of Example 28, further comprising:
   receiving a radio resource control (RRC) value to configure a plurality of candidate values for the discard low importance timer, the plurality of candidate values to respectively correspond to a plurality of codepoints of the plural-bit field.
31. A method comprising:
   determining a packet in a buffer associated with a logical channel has a remaining time until discard smaller than a remaining time threshold;
   determining the packet has an importance greater than an importance threshold; and
   adjusting a priority of the logical channel based on said determining that the packet has an importance greater than the importance threshold.
32. The method of Example 31, wherein determining the packet has an importance greater than an importance threshold comprises:
   determining the packet is configured with a discard timer associated with the importance greater than the importance threshold.
33. The method of Example 31, further comprising:
   determining protocol data unit set importance (PSI)-based discarding is activated; and
   adjusting the priority of the logical channel based on said determining PSIbased discarding is activated.
34. The method of Example 33, further comprising:
   determining, based on determining PSI-based discarding is activated, a discard timer configuration is to be used as a basis for determining that the packet has an importance greater than the importance threshold.
35. The method of Example 31, wherein determining the packet has an importance greater than an importance threshold comprises:
   determining the packet is associated with a protocol data unit (PDU) set having an importance greater than the importance threshold.
36. A method comprising:
   determining protocol data unit set importance (PSI)-based service data unit (SDU) discarding is activated; and
   determining a data radio bearer (DRB) is split between a first media access control (MAC) entity associated with a master node (MN) and a second MAC entity that is associated with a secondary node (SN); and
   determining whether to follow commands for activating or deactivating protocol data unit set importance (PSI)-based service data unit (SDU) discarding received from the MN via the first MAC entity or from the SN via the second MAC entity.
37. The method of Example 36, wherein determining whether to follow commands for activating or deactivating PSI-based SDU discarding received from the MN via the first MAC entity or from the SN via the second MAC entity comprises:
   determining to follow commands from the MN and to ignore commands from the SN.
38. The method of Example 36, wherein determining whether to follow commands for activating or deactivating PSI-based SDU discarding received from the MN via the first MAC entity or from the SN via the second MAC entity comprises:
   determining to follow commands from the SN and to ignore commands from the MN.
39. The method of Example 36, wherein determining whether to follow commands for activating or deactivating PSI-based SDU discarding received from the MN via the first MAC entity or from the SN via the second MAC entity comprises:
   determining to activate PSI-based SDU discarding only when both the MN and the SN send commands to activate PSI-based SDU discarding; or
   determining to de-activate PSI-based SDU discarding only when both the MN and the SN send commands to de-activate PSI-based SDU discarding.
40. The method of Example 36, wherein determining whether to follow commands for activating or deactivating PSI-based SDU discarding received from the MN via the first MAC entity or from the SN via the second MAC entity comprises:
   determining to activate PSI-based SDU discarding when at least one node of the MN and the SN sends a command to activate PSI-based SDU discarding; or
   determining to de-activate PSI-based SDU discarding when at least one node of the MN and the SN sends a command to de-activate PSI-based SDU discarding.
41. The method of Example 36, further comprising:
   determining that PSI-based SDU discarding was activated by the SN; and
   avoiding, based on said determining that PSI-based SDU discarding was activated by the SN, submission of packet data convergence protocol (PDCP) protocol data units (PDU) to a radio link control (RLC) entity associated with the SN.
42. The method of Example 36, further comprising:
   determining that PSI-based SDU discarding was activated by the MN; and
   avoiding, based on said determining that PSI-based SDU discarding was activated by the MN, submission of packet data convergence protocol (PDCP) protocol data units (PDU) to a radio link control (RLC) entity associated with the MN.
43. The method of Example 36, further comprising:
   receiving a configuration parameter from a network; and
   determining whether to follow commands for activating or deactivating PSIbased SDU discarding received from the MN or from the SN based on the configuration parameter.
44. A method comprising:
   receiving a packet from an upper layer;
   starting a discard timer for low importance (*discardTimerForLowImportance*) based on receiving the packet;
   detecting an expiration of the discard timer for low importance; and
   determining, based on detecting the expiration of the discard timer for low importance and an additional factor, whether to discard the packet.
45. The method of Example 44, wherein the additional factor is an importance level of the packet or a battery power status.
46. The method of Example 44, wherein the additional factor is information from an application associated with the packet or a thermal condition of a device.
47. The method of Example 44, wherein the additional factor is context information from a user equipment.
48. The method of Example 44, wherein the additional factor is loading of a data radio bearer.
49. The method of Example 44, further comprising:
   starting a discard timer (*discardTimer*) based on receiving the packet, wherein the *discardTimer* has a starting value greater than a starting value of the *discardTimerForLow Importance.*
50. The method of Example 49, wherein determining whether to discard the packet comprises:
   determining not to discard the packet before expiration of the *discardTimer.*

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
determining a packet in a buffer associated with a logical channel has a remaining time until discard smaller than a remaining time threshold;
determining the packet has an importance greater than an importance threshold; and
adjusting a priority of the logical channel based on said determining that the packet has an importance greater than the importance threshold.

2. The method of claim 1, wherein determining the packet has an importance greater than an importance threshold comprises:
determining the packet is configured with a discard timer associated with the importance greater than the importance threshold.

3. The method of claim 1 or 2, further comprising:
determining protocol data unit set importance (PSI)-based discarding is activated; and
adjusting the priority of the logical channel based on said determining PSI-based discarding is activated.

4. The method of claim 3, further comprising:
determining, based on determining PSI-based discarding is activated, a discard timer configuration is to be used as a basis for determining that the packet has an importance greater than the importance threshold.

5. The method of any preceding claim, wherein determining the packet has an importance greater than an importance threshold comprises:
determining the packet is associated with a protocol data unit (PDU) set having an importance greater than the importance threshold.

6. Processor circuitry to:
determine protocol data unit set importance (PSI)-based service data unit (SDU) discarding is activated; and
determine a data radio bearer (DRB) is split between a first media access control (MAC) entity associated with a master node (MN) and a second MAC entity that is associated with a secondary node (SN); and
determine whether to follow commands for activating or deactivating protocol data unit set importance (PSI)-based service data unit (SDU) discarding received from the MN via the first MAC entity or from the SN via the second MAC entity.

7. The processor circuitry of claim 6, wherein to determine whether to follow commands for activating or deactivating PSI-based SDU discarding received from the MN via the first MAC entity or from the SN via the second MAC entity the processor circuitry is to:
determine to follow commands from the MN and to ignore commands from the SN.

8. The processor circuitry of claim 6 or 7, wherein to determine whether to follow commands for activating or deactivating PSI-based SDU discarding received from the MN via the first MAC entity or from the SN via the second MAC entity the processor circuitry is to:
determine to follow commands from the SN and to ignore commands from the MN.

9. The processor circuitry of any of claims 6-8, wherein to determine whether to follow commands for activating or deactivating PSI-based SDU discarding received from the MN via the first MAC entity or from the SN via the second MAC entity the processor circuitry is to:
determine to activate PSI-based SDU discarding only when both the MN and the SN send commands to activate PSI-based SDU discarding; or
determine to de-activate PSI-based SDU discarding only when both the MN and the SN send commands to de-activate PSI-based SDU discarding.

10. The processor circuitry of any of claims 6-9, wherein to determine whether to follow commands for activating or deactivating PSI-based SDU discarding received from the MN via the first MAC entity or from the SN via the second MAC entity the processor circuitry is to:
determine to activate PSI-based SDU discarding when at least one node of the MN and the SN sends a command to activate PSI-based SDU discarding; or
determine to de-activate PSI-based SDU discarding when at least one node of the MN and the SN sends a command to de-activate PSI-based SDU discarding.

11. The processor circuitry of any one of claims 6-10, wherein the processor circuitry is further to:
determine that PSI-based SDU discarding was activated by the SN; and
avoid, based on said determination that PSI-based SDU discarding was activated by the SN, submission of packet data convergence protocol (PDCP) protocol data units (PDU) to a radio link control (RLC) entity associated with the SN.

12. The processor circuitry of any one of claims 6-10, wherein the processor circuitry is further to:
determine that PSI-based SDU discarding was activated by the MN; and
avoid, based on said determination that PSI-based SDU discarding was activated by the MN, submission of packet data convergence protocol (PDCP) protocol data units (PDU) to a radio link control (RLC) entity associated with the MN.

13. One or more storage-readable media having instructions that, when executed, cause processor circuitry to:
receive a packet from an upper layer;
start a discard timer for low importance (*discardTimerForLowImportance*) based on receipt of the packet;
detect an expiration of the discard timer for low importance; and
determine, based on detection of the expiration of the discard timer for low importance and an additional factor, whether to discard the packet.

14. The one or more computer-readable media of claim 13, wherein the additional factor is an importance level of the packet; a battery power status; information from an application associated with the packet; a thermal condition of a device; context information from a user equipment; or loading of a data radio bearer.

15. The one or more computer-readable media of claim 13 or 14, wherein the instructions, when executed, further cause the processor circuitry to:
start a discard timer (*discardTimer*) based on receipt of the packet, wherein the *discardTimer* has a starting value greater than a starting value of the *discardTimerForLowImportance.*
